# EUROPEAN PATENT SPECIFICATION

(11) **EP 2 757 407 B1**
(45) Date of publication and mention of the grant of the patent: **04.10.2017**
(21) Application number: 13000271.0
(22) Date of filing: 18.01.2013
(51) Int. Cl.: G02F 1/13, G06F 3/0488, B60K 35/00, G06F 3/038

(54) **Multiple-view display system with user recognition and operation method thereof**
Anzeigesystem für mehrere Ansichten mit Benutzererkennung und Betriebsverfahren davon
Système d'affichage à vues multiples à reconnaissance d'utilisateur et son procédé de fonctionnement

(43) Date of publication of application: 23.07.2014
(73) Proprietor: Magna Electronics Solutions GmbH, 35578 Wetzlar (DE)
(72) Inventor: Lauber, Christoph, 35578 Wetzlar (DE); Muresan, Gabriel, 35578 Wetzlar (DE)
(74) Representative: Ricker, Mathias

(56) References cited:
- EP-A2- 1 977 926
- WO-A1-2007/141614
- US-A1- 2008 129 684

## Description

### BACKGROUND OF THE INVENTION

### 1. Field of the Invention

The present invention relates to a multiple-view display system. In particular, the present invention relates to a multiple-view display system with user recognition ability for different users to provide touchevent.

### 2. Description of the Related Art

The multiple-view display system could show different video contents on only one screen for multiple recipients, and more and more automotive sectors are employed this technology. For example, when the driver is using the navigation function, the co-driver is watching a movie at the same time. Further, with the development of non-mechanical control technology, such as touch control technology, the user can touch the screen to provide touchevent and control the multiple-view display system to eliminate extra mechanical switching structure and save the cost. However, adapting the touch control technology in the multiple-view display system may encounter touch judgment confusion. The multiple-view display system only has one touchscreen for two users to operate, and the system cannot determine which user made a touchevent to control the multiple-view touchscreen. Therefore, it is necessary for the multiple-view display system to distinguish which user is operating with the multiple-view touchscreen.

There were known approaches to solve the above mentioned problem. For example, Japanese Unexamined Patent Application Publication No. 6-186526 and No. 7-103778 disclose an approach that the buttons or menus for each view around the touchscreen in a manner that are non-overlapping. This approach is achieved by restricting the layout and the design, and large area for emplacement is also required. Another approach is the capacitive coupling solution where a touch object is capacitive connected to a signal source where the mutual capacitance is measured against. However, automotive industry is dedicating to reduce the electromagnetic effect in cars so this approach is not suitable. Camera identification to detect the hand movement of the user interacting with the system is not rewarding because of extra costs for the hardware and high failure rates of detecting under different illumination levels.

US 20110310050A1 and WO 2010/036217 A1 disclose an approach for detecting the user via optical sensors, which is independent from outside factors such as different illumination levels. However, such approach needs multiple sensors arranged around the touchscreen to detect which user is currently to provide a touchevent to the system, and is not cost efficient. Therefore, the approach for avoid touch judgment confusion needs further improvement to lower cost and thereby increase the price competitiveness of multiple-view display system in general.

The European patent document EP 1 977 926 A2 discloses a control unit which has a display unit for representing selectable functions, where the display unit is executed in such a manner that a display screen is represented in an angular field area and another display screen is represented in another angular field area. An interface is provided for a determination device for determining an observer direction from which a control device is controlled, and allocating an operation to a represented selectable function in one respective display screen which is visible from the determined observer direction. An independent claim is also included for a control method for an electronic device in a vehicle.

The US patent document US 2008/0129684 A1 discloses a display system and a method of controlling a multiple-view display in a vehicle are provided. The display system includes a display for generating a first image that is viewable within a driver viewing window and a passenger image that is viewable within a passenger viewing window. The display system also includes sensors for sensing location of a driver of the vehicle. The display system further includes a controller for controlling the first and second images shown on the display. The controller disables the presentation of at least some image content in the passenger viewing window when the driver is determined to be attempting to view the passenger image.

The international patent document WO 2007/141614 A1 discloses a vehicle display apparatus which includes an image display device disposed in a region where an operator is unable to operate the display apparatus, and a transparent display input device installed in a region from a surface portion of the instrument panel to an upper portion of a center console. The vehicle display apparatus is designed to allow the operator to operate the image display device from a remote position by manipulating the transparent display apparatus disposed near the operator.

### SUMMARY OF THE INVENTION

One aspect of the invention is to provide a multiple-view display system, comprising: a multiple-view touchscreen adapted to display different video contents simultaneously in accordance with a viewing angle of a first user and a second user and allow the users to provide a touchevent by touching the multiple-view touchscreen; a seat sensor for sensing whether the seat is occupied by the second user; a sensor for detecting a proximity of the first user or the second user to the multiple-view touchscreen, the sensor being located on a right side, or left side, or lower right side or lower left side of the multiple-view touchscreen; and a controller coupled to the multiple-view touchscreen, the seat sensor and the sensor, and adapted to enable a determination process to identify whether the touch event is given by the first user or the second user through the proximity information transmitted by the sensor; wherein the determination process is disabled when the seat is not occupied by the second user and the first user is predetermined as a default user in the system; the determination process starts when the seat is occupied by the second user, and the default user converts to the one who is on the opposite side of the sensor being always in control of the multiple-view touchscreen except that a non default user passes the sensor and is so detected as a current user.

Another aspect of the invention is to provide a method for operating a multiple-view display system comprising a multiple-view touchscreen, a controller coupled to the multiple-view touchscreen, a seat sensor and a sensor for detecting a proximity of a first user or a second user to the multiple-view touchscreen, the sensor being located on a right side, or left side, or lower right side or lower left side of the multiple-view touchscreen, comprising: detecting whether a seat is occupied by the second user via the seat sensor, wherein when the seat is not occupied by the second user, the first user is the default user; when the seat is occupied by the second user, a determination process is initiated and the default user converts to the one who is on the opposite side of the sensor being always in control of the multiple-view touchscreen except that a non default user passes the sensor and is so detected as a current user; determining whether the sensor detects a proximity of the user to the multiple-views touchscreen and identifying the touch event is given by the first user or the second user; converting the touch event to a command; and responding to the command by the multiple-view display system.

To improve understanding of the different aspects of the disclosure, the techniques employed in the patent invention to achieve the foregoing problems, characteristics and effects thereof are described hereinafter by the way of examples with reference to the accompanying drawings.

### BRIEF DESCRIPTION OF THE DRAWINGS

FIG. 1 is a block diagram illustrating an exemplary embodiment of the multiple-view display system of the present invention.
FIG. 2 shows an exemplary embodiment for the multiple-views display system appearance of the present invention.
FIGS. 3(A)-3(C) show exemplary embodiments with different arrangement possibilities for placing the sensor of the present invention.
FIG. 4 shows a flow chart illustrating an exemplary embodiment method for operating the multiple-view display system of the present invention.

### DETAILED DESCRIPTION OF THE PREFERRED EMBODIMENTS

In the following detailed description, only certain exemplary embodiments of the present invention are shown and described, by way of illustration. As those skilled in the art would recognize, the described exemplary embodiments may be modified in various way all without departing from the spirit or scope of the present invention.

Accordingly, the drawing and description are to be regarded as illustrative in nature, and not restrictive.

The technical contents of the present invention will become apparent with the detailed description of preferred embodiment.

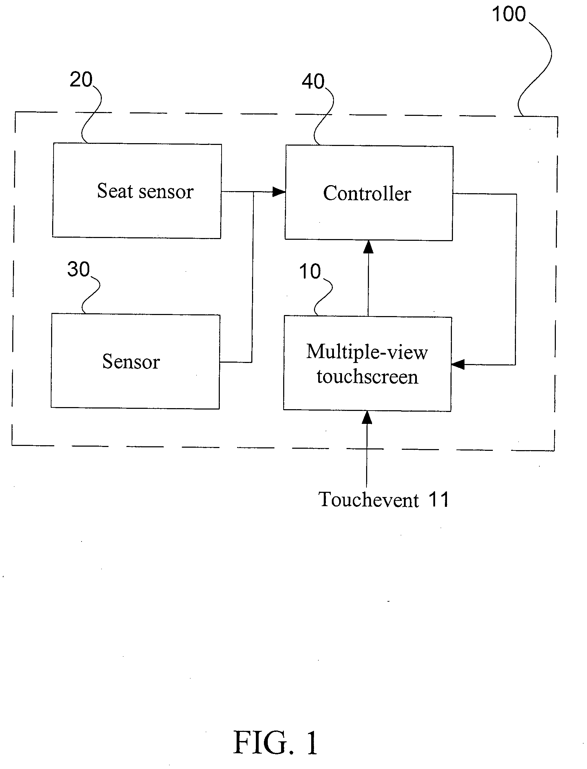

FIG. 1 is a block diagram illustrating an exemplary multiple-view display system 100 of the present invention. In the exemplary embodiment, the multiple-view display system 100 comprises a multiple-view touchscreen 10, a seat sensor 20, a sensor 30 and a controller 40. The multiple-view touchscreen 10 delivers different images to viewers depending on the direction from which the multiple-view touchscreen 10 is being viewed. For example, when the multiple-view display system 100 is used in a car, a first user can see a first video content (such as GPS navigation map) on the multiple-view touchscreen 10 in a first angle of view. Simultaneously, the multiple-view touchscreen 10 may present a second video content (such as a movie or a TV program) to a second user in a second angle of view. It is also possible that the first user and the second user can connect their smart phones separately to the multiple-view display system 100, and mirror the display of their smart phones to the multiple-view touchscreen 10. The multiple-view touchscreen 10 allows the either user to provide a touchevent 11 upon a user touches the multiple-view touchscreen 10. For example, the fist user who is viewing the GPS navigation map may provide a touchevent 11 by touching the multiple-view touchscreen 10 at a location that corresponds to the desired menu command (such as inputting the site location or searching on the map.) In addition, the DVD application or TV program may present menu options (such as to pause the movie or to turn down the volume) relevant to the current display being viewed by the second user upon the multiple-view touchscreen 10 is touched. The second user may provide another touchevent 11 by touching the multiple-view touchscreen 10 at a location corresponding to the menu options.

The multiple-view display system 100 is adapted to distinguish whether the touchevent 11 is given by the first user or the second user even if the signal-inputting area for the first user overlap with that of the second user since the two users provide touchevents 11 on the same multiple-view touchscreen 10. To accomplish this, the multiple-view display system 100 includes the seat sensor 20 for sensing a status of a seat occupancy of the second user and for generating an output signal indicative of said status, and a sensor 30 for detecting a proximity of the first user or the second user to the multiple-view touchscreen 10, and a controller 40 coupled to the multiple-view touchscreen 10, the seat sensor 20 and the sensor 30, and adapted to enable a determination process to identify whether the touchevent 11 is given by the first user or the second user.

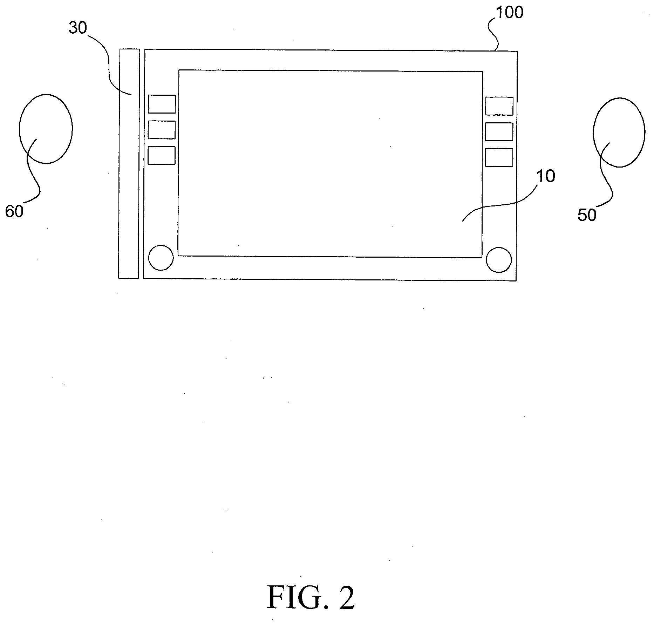

Referring to FIG. 2, the seat sensor 20 (not shown) is setting on a seat adapted to detect whether the seat is occupied by the second user 50. By incorporating the seat sensor 20 to the multiple-view display system 100, it is possible to get the information if the second user 50 is present or not. While the seat of the second user 50 is empty, then the first user 60 is always in control of the multiple-view touchscreen 10, and a determination process needs not to be started. In this state, the first user 60 is predetermined as a default user in the multiple-view display system 100. Therefore, the failure rate to determination is minimized. The techniques of the seat sensor for detecting a seated position of an occupant are well-known in the art. For example, a technique of providing a seat sensor disposed within a seat cushion for detecting a seated position of an occupant. More specifically, the seat sensor has a sheet-like configuration and is interleaved between a surface layer and a cushion pad of the seat cushion. According to this technique, when an occupant is seated on the seat cushion, a pressing force is applied to the seat sensor by the seating load, so that the seated position can be detected. The occupancy of the second user 50 may also be detected by sensing whether the seatbelt is fastened or not.

If the second user 50 is present, the determination process is started, and the default user converts to the one who is on the opposite side of the sensor 30. In this embodiment, the sensor 30 is set on the left side of the multiple-view touchscreen 10, therefore, the default user converts to the second user 50. In this state, the second user 50 (now is the default user) is always in control of the multiple-view touchscreen 10 except that the non default user (the first user 60) passes the filed of the sensor 30 and is so detected as a current user. In other words, if the first user 60 wants to control the multiple-view touchscreen 10, he must pass the field of the sensor 30. If the field of the sensor 30 is not entered, the touchevent 11 is identified as given by the second user 50.

The term "the first user" used herein refers to the one, whose seat occupancy need not to be detected, and is preset to be a default user when the determination process of the system of the present invention does not start. The term "the second user" used herein refers to the one, whose seat occupancy is detected by the seat sensor 20 to enable the determination process of the system of the present invention. The term "default user" used herein can divide to two stages (the determination process is started or not); one refers to the user who is always in control of the multiple-view display system 100 when the determination process is not started; in this stage, the default user is the one who is not detected by the seat sensor 20. The other is that when the determination process is started, the default user is the one who is on the opposite side to the sensor 30 and is always in control of the multiple-view touchscreen 10 except that the non default user passes the filed of the sensor 30 and is so detected as a current user.

If the multiple-view display system 100 of this embodiment (FIG. 2) is adapted to a car, the first user 60 may be a driver and the second user 50 may be a co-driver. The seat sensor 20 is for detecting the seat occupancy of the co-driver. Therefore, if the co-driver is not present, the determination process needs not to be started and the driver, who is not detected by the seat sensor 20, is predetermined as a default user and is always in control of the touchscreen 10. If the co-driver is present, the determination process is started. In this state, the default user converts to the one who is on the opposite side of the sensor 30, namely, the co-driver. Therefore, all touchevents are related to the co-driver. If the driver wants to interact with the touchscreen 10, he must lead his arm to the multiple-view touchscreen 10. By doing this, he is detected by the sensor 30, and the system will determine that the incoming touchevent 11 is related to the driver. This embodiment might be a preferable embodiment because it is guaranteed that in case of a detection error of the sensor 30, the co-driver cannot manipulate the view of the driver.

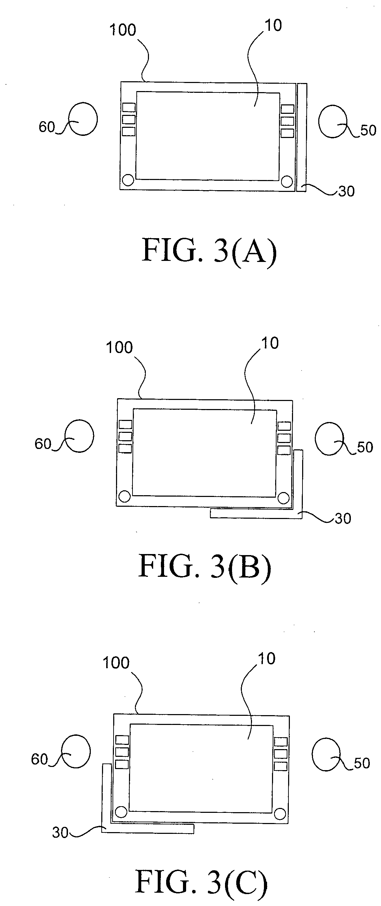

Other embodiments of different arrangements of the sensor 30 are provided in FIGS. 3(A)-3(C). Referring to FIG. 3(A), a seat sensor 20 (not shown) is incorporated to the multiple-view display system 100 for sensing the status of the seat occupancy of the second user 50. The sensor 30 for detecting a proximity of the second user 50 to the multiple-view touchscreen 10 is setting on the right side of the multiple-view touchscreen 10. While the seat of the second user 50 is empty, the determination process is disabled and then the first user 60 is predetermined as a default user and is always in control of the multiple-view touchscreen 10. If the second user 50 is present, the seat occupancy of the second user 50 is detected by the seat sensor 20, the determination process is started, and the default user converts to the one who is on the opposite side of the sensor 30. In this stage of this embodiment, the default user who is on the opposite side of the sensor 30 is the first user 60. Therefore, the system 100 maintains the default user to be the same person, namely, the first user 60. If the second user 50 wants to control the multiple-view touchscreen 10, he must pass the field of the sensor 30 and is so detected as the current user. If the field of the sensor 30 is not entered, the touchevent 11 is identified as given by the first user 60. Other modifications of the arrangement of the sensor 30 are possible, as shown in FIG. 3(B) and FIG. 3(C). In FIG. 3(B), the sensor 30 is setting at lower right of the multiple-view touchscreen 10, and in FIG. 3(C), the sensor 30 is setting at lower left of the multiple-view touchscreen 10. In such arrangement, the detection accuracy may be enhanced.

The sensor 30 for detecting a proximity of the first user or the second user to the multiple-view touchscreen 10 can be a laser sensor, a variable capacitor, an ultrasonic sensor, an optical sensor or an infrared sensor. Examples of there sensors can be found in US Patent Nos. 7,498,749, 7,443,101 and 7,336,037. For example, the sensor 30 can be an optical sensor that converts light rays into electronic signals. It has the ability to measure the changes from one or more light beams. This change is most often based around alterations to the intensity of the light. When a phase change occurs, the light sensor acts as a photoelectric trigger, either increasing or decreasing the electrical output, depending on the type of sensor. Another exemplary sensor 30 includes a variable capacitor, the capacitance of which changes in value when a user is proximate thereto. The variable capacitor is connected as one input to a comparator, and a reference voltage is provided as the other input to the comparator.

Those of ordinary skilled in the art will understand that, while the sensor 30 is illustrated above, the use of other types of sensors are within the scope of the present invention. By ways of example, the sensor 30 for detecting a proximity of the first user or the second user to the multiple-view touchscreen 10 may operate based on inductance, infrared signals, optical signals or the like. The choice of a particular sensor type may be made by one of ordinary skilled in the art based on the multiple-view display system 100 design considerations.

In a preferable embodiment, the multiple-view display system 100 is contained in an infotainment system of a vehicle. More precisely, the infotainment system is mounted in the center of a car dashboard. However, the multiple-view display system 100 can also be applied in planes or trains or consumer electronics. The multiple-view touchscreen 10 may be a capacitive or resistive touchscreen, and all touchevents will be detected by the touch screen reader. The multiple-view display system 100 may further comprise a video mixing unit for generate two video signals such as a navigation and a movie corresponded to the first user and the second user.

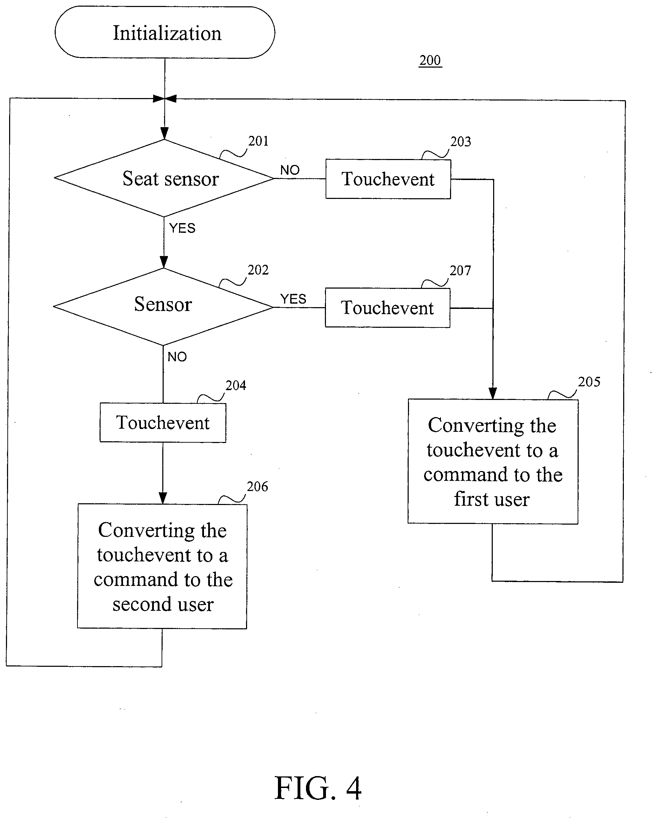

FIG. 4 shows a flow chart illustrating a method in accordance with the exemplary embodiment corresponding to FIG. 2 of the present invention, namely, the seat sensor is for detecting the seat occupancy of the second user who is at the right side of the multiple-view touchscreen, and the sensor is setting at the left side of the multiple-view touchscreen. The method is generally referred to by the reference number 200. After the initialization of the multiple-view display system 100, at block 201, the seat occupancy of the second user is detected via a seat sensor. If the seat is empty, it means that the second user is not present and the first user is predetermined as a default user, and every touchevent (block 203) is identified as given by the first user, and the next determination process that a sensor sensing a proximity of the user to the multiple-view touchscreen (block 202) is disabled. If the seat sensor detects the second user, then the determination process starts, and the default user converts to the one who is on the opposite side of the sensor, that is the second user (block 202). The sensor installed on the left side of the touchscreen is for detecting a proximity of the first user to the multiple-view touchscreen and transmitting the proximity information to the controller, and the controller can decide whether the touchevent is related to which user. If the first user provides a touchevent to the multiple-view touchscreen (block 207), he must pass the field of the sensor and is so detected as the current user (block 205). If the field of the sensor is not entered, the touchevent (block 204) is identified as given by the second user (block 206). After determining whether the sensor detects proximity of the user to the multiple-view touchscreen, the controller can identify the touchevent is given by which user, and convert the touchevent to a command; and the multiple-view display system may respond to the command.

In conclusion, the invention provides a multiple-view display system and method for operating the multiple-view display system. It is to be understood that in modern vehicles, the seat sensor already exists. By incorporating the seat sensor to the multiple-view display system, it is possible to get the information whether a user is present or not. Therefore, only one sensor installed on one side of the multiple-view touchscreen for detecting a proximity of the user to the multiple-view touchscreen is enough to distinguish the occupants, and no extra device is required, thus decreases the cost.

While the present invention has been described in connection with certain exemplary embodiments, it is to be understood that the invention is not limited to the disclosed embodiment, but, on the contrary, is intended to cover various modifications and equivalent arrangements included within the scope of the appended claims, and equivalents thereof.

## Claims

1. A multiple-view display system (100), comprising:
a multiple-view touchscreen (10) adapted to display different video contents simultaneously in accordance with a viewing angle of a first user (60) and a second user (50) and allow the users to provide a touch event (11) by touching the multiple-view touchscreen (10);
a seat sensor (20) for sensing whether a seat is occupied by the second user (50);
a sensor (30) for detecting a proximity of the first user (60) or the second user (50) to the multiple-view touchscreen (10); and
a controller (40) coupled to the multiple-view touchscreen (10), the seat sensor (20) and the sensor (30), and adapted to enable a determination process to identify whether the touch event (11) is given by the first user (60) or the second user (50) through the proximity information transmitted by the sensor (30);
**characterized in that** the sensor (30) is located on a right side, or left side, or lower right side, or lower left side of the multiple-view touchscreen (10), and the determination process is disabled when the seat is not occupied by the second user (50) and the first user (60) is predetermined as a default user in the system; the determination process starts when the seat is occupied by the second user (50), and the default user is the one who is on the opposite side of the sensor (30) being always in control of the multiple-view touchscreen (10) except that a non default user passes the sensor (30) and is so detected as a current user.

2. The multiple-view display system (100) of claim 1, wherein the sensor (30) is a laser sensor, a variable capacitor, an ultrasonic sensor, an optical sensor or an infrared sensor.

3. The multiple-view display system (100) of claim 1 or 2, wherein the sensor (30) is for detecting the proximity of the second user (50) to the multiple-view touchscreen (10).

4. The multiple-view display system (100) of any one of the claims 1 to 3, wherein the multiple-view touchscreen (10) is a capacitive touchscreen.

5. The multiple-view display system (100) of any one of the claims 1 to 3, wherein the multiple-view touchscreen (10) is a resistive touchscreen (10).

6. The multiple-view display system (100) of any one of the claims 1 to 5, wherein the multiple-view display system (100) is setting on a head unit in a front dashboard of a vehicle.

7. The multiple-view display system (100) of claim 6, wherein the head unit is an infotainment system.

8. The multiple-view display system (100) of any one of the claims 1 to 7, wherein the seat sensor (20) is adapted to detect whether a seatbelt is fastened.

9. The multiple-view display system (100) of any one of the claims 1 to 8, further comprising a video mixing unit for generate two video signals corresponded to the first user (60) and the second user (50).

10. A method for operating a multiple-view display system (100) comprising a multiple-view touchscreen (10), a controller (40) coupled to the multiple-view touchscreen (10), a seat sensor (20) and a sensor (30) for detecting a proximity of a first user (60) or a second user (50) to the multiple-view touchscreen (10), the sensor (30) being located on a right side, or left side, or lower right side or lower left side of the multiple-view touchscreen (10), comprising:
detecting whether a seat is occupied by the second user (50) via the seat sensor (20), wherein when the seat is not occupied by the second user (50), the first user (60) is the default user; when the seat is occupied by the second user (50), a determination process is initiated and the default user is the one who is on the opposite side of the sensor (30) being always in control of the multiple-view touchscreen (10) except that a non default user passes the sensor (30) and is so detected as a current user;
determining whether the sensor (30) detects a proximity of the user to the multiple-views touchscreen (10) and identifying the touch event (11) is given by the first user (60) or the second user (50);
converting the touch event (11) to a command; and
responding to the command by the multiple-view display system (100).

11. The method of claim 10, wherein the sensor (30) is a laser sensor, a variable capacitor, an ultrasonic sensor, an optical sensor or an infrared sensor.

12. The method of claim 10 or 11, wherein the multiple-view touchscreen (10) is a capacitive touchscreen.

13. The method of claim 10 or 11, wherein the multiple-view touchscreen (10) is a resistive touchscreen.

## Patentansprüche

1. Mehrfachansicht-Anzeigesystem (100), welches aufweist:
einen Mehrfachansicht-Berührungsbildschirm (10), der dazu ausgestaltet ist, unterschiedliche Videoinhalte gleichzeitig in Übereinstimmung mit einem Betrachtungswinkel eines ersten Benutzers (60) und eines zweiten Benutzers (50) anzuzeigen und es den Benutzern zu ermöglichen, ein Berührungsereignis (11) durch ein Berühren des Mehrfachansicht-Berührungsbildschirm (10) bereit zu stellen,
einen Sitzsensor (20), um zu erfassen, ob ein Sitz von dem zweiten Benutzer (50) belegt ist,
einen Sensor (30), um eine Nähe des ersten Benutzers (60) oder des zweiten Benutzers (50) zu dem Mehrfachansicht-Berührungsbildschirm (10) zu erfassen, und
eine Steuerung (40), die mit dem Mehrfachansicht-Berührungsbildschirm (10), dem Sitzsensor (20) und dem Sensor (30) verbunden ist und dazu ausgestaltet ist, einen Bestimmungsprozess zu ermöglichen, um durch die von dem Sensor (30) übertragene Annäherungsinformation zu identifizieren, ob das Berührungsereignis (11) durch den ersten Benutzer (60) oder den zweiten Benutzer (50) hervorgerufen worden ist,
**dadurch gekennzeichnet, dass** der Sensor (30) an einer rechten Seite oder an einer linken Seite oder an einer unteren rechten Seite oder an einer unteren linken Seite angeordnet ist, dass der Bestimmungsprozess deaktiviert ist und dass der erste Benutzer (60) als ein Standardbenutzer in dem System vorgegeben ist, wenn der Sitz nicht von dem zweiten Benutzer (50) belegt ist, dass der Bestimmungsprozess beginnt, wenn der Sitz von dem zweiten Benutzer (50) belegt ist, und dass der Standardbenutzer derjenige ist, der sich auf der gegenüber liegenden Seite des Sensors (30) befindet und der immer den Mehrfachansicht-Berührungsbildschirm (10) steuert, außer wenn ein Nicht-Standard-Benutzer an dem Sensor (30) vorbei kommt und so als ein aktueller Benutzer erkannt wird.

2. Mehrfachansicht-Anzeigesystem (100) nach Anspruch 1, wobei der Sensor (30) ein Lasersensor, ein variabler Kondensator, ein Ultraschallsensor, ein optischer Sensor oder ein Infrarotsensor ist.

3. Mehrfachansicht-Anzeigesystem (100) nach Anspruch 1 oder 2, wobei der Sensor (30) zum Erfassen der Nähe des zweiten Benutzers (50) zu dem Mehrfachansicht-Berührungsbildschirm (10) ausgestaltet ist.

4. Mehrfachansicht-Anzeigesystem (100) nach einem der Ansprüche 1 bis 3, wobei der Mehrfachansicht-Berührungsbildschirm (10) ein kapazitiver Berührungsbildschirm (10) ist.

5. Mehrfachansicht-Anzeigesystem (100) nach einem der Ansprüche 1 bis 3, wobei der Mehrfachansicht-Berührungsbildschirm (10) ein resistiver Berührungsbildschirm (10) ist.

6. Mehrfachansicht-Anzeigesystem (100) nach einem der Ansprüche 1 bis 5, wobei das Mehrfachansicht-Anzeigesystem (100) auf einer Kopfeinheit in einem vorderen Armaturenbrett eines Fahrzeugs angeordnet ist.

7. Mehrfachansicht-Anzeigesystem (100) nach Anspruch 6, wobei die Kopfeinheit ein Infotainment-System ist.

8. Mehrfachansicht-Anzeigesystem (100) nach einem der Ansprüche 1 bis 7, wobei der Sitzsensor (20) ausgestaltet ist, zu erfassen, ob ein Sicherheitsgurt angelegt worden ist.

9. Mehrfachansicht-Anzeigesystem (100) nach einem der Ansprüche 1 bis 8, welches ferner einer Video-Mischeinheit aufweist, um zwei Videosignalen zu erzeugen, die dem ersten Benutzer (60) und dem zweiten (50) Benutzer entsprechen.

10. Verfahren zum Betreiben eines Mehrfachansicht-Anzeigesystems (100), welches einen Mehrfachansicht-Berührungsbildschirm (10), eine mit dem Mehrfachansicht-Berührungsbildschirm verbundene Steuerung (40), einen Sitzsensor (20) und einen Sensor (30) zum Erfassen einer Nähe eines ersten Benutzers (60) oder eines zweiten Benutzers (50) zu dem Mehrfachansicht-Berührungsbildschirm (10) aufweist, wobei der Sensor (30) an einer rechten Seite oder an einer linken Seite oder an einer unteren rechten Seite oder an einer unteren linken Seite angeordnet ist und wobei das Verfahren aufweist:
ein Erfassen mit dem Sitzsensor (20), ob ein Sitz von dem zweiten Benutzer (50) belegt ist, wobei, wenn der Sitz nicht von dem zweiten Benutzer (50) belegt ist, der erste Benutzer (60) der Standardbenutzer ist, und wenn der Sitz von dem zweiten Benutzer (50) belegt ist, ein Bestimmungsprozess veranlasst wird und der Standardbenutzer derjenige ist, der sich auf der gegenüber liegenden Seite des Sensors (30) befindet und der immer die Steuerung über den Mehrfachansicht-Berührungsbildschirm (10) hat, außer wenn ein Nicht-Standardbenutzer an dem Sensor (30) vorbei kommt und so als ein aktueller Benutzer erkannt wird,
ein Bestimmen, ob der Sensor (30) eine Annäherung des Benutzers an den Mehrfachansicht-Berührungsbildschirm (10) erfasst und bestimmt, ob das Berührungsereignis (11) durch den ersten Benutzer (60) oder den zweiten Benutzer (50) hervorgerufen worden ist,
ein Umwandeln des Berührungsereignisses (11) in einen Befehl und
ein Antworten auf den Befehl durch das Mehrfachansicht-Anzeigesystem (100).

11. Verfahren nach Anspruch 10, wobei der Sensor (30) ein Lasersensor, ein variabler Kondensator, ein Ultraschallsensor, ein optischer Sensor oder ein Infrarotsensor ist.

12. Verfahren nach Anspruch 10 oder 11, wobei der Mehrfachansicht-Berührungsbildschirm (10) ein kapazitiver Berührungsbildschirm ist.

13. Verfahren nach Anspruch 10 oder 11, wobei der Mehrfachansicht-Berührungsbildschirm (10) ein resistiver Berührungsbildschirm ist.

## Revendications

1. Système d'affichage multi-vues (100) comprenant :
un écran tactile multi-vues (10) adapté pour afficher simultanément des contenus vidéo différents en fonction d'un angle de vision d'un premier utilisateur (60) et d'un deuxième utilisateur (50) et permettre aux utilisateurs de fournir un événement tactile (11) en touchant l'écran tactile multi-vues (10) ;
un capteur de siège (20) pour détecter si un siège est occupé par le deuxième utilisateur (50) ;
un capteur (30) pour détecter une proximité du premier utilisateur (60) ou du deuxième utilisateur (50) à l'écran tactile multi-vues (10) ; et
un contrôleur (40) couplé à l'écran tactile multi-vues (10), au capteur de siège (20) et au capteur (30), et adapté pour activer un processus de détermination pour identifier le fait que l'événement tactile (11) est fourni par le premier utilisateur (60) ou le deuxième utilisateur (50) par le biais des informations de proximité transmises par le capteur (30) ;
**caractérisé en ce que** le capteur (30) est situé sur un côté droit, ou un côté gauche, ou un côté inférieur droit ou un côté inférieur gauche de l'écran tactile multi-vues (10), et le processus de détermination est désactivé quand le siège n'est pas occupé par le deuxième utilisateur (50) et le premier utilisateur (60) est prédéterminé comme un utilisateur par défaut dans le système ; le processus de détermination démarre quand le siège est occupé par le deuxième utilisateur (50), et l'utilisateur par défaut est celui qui est du côté opposé au capteur (30) ayant toujours le contrôle de l'écran tactile multi-vues (10) à moins qu'un utilisateur non par défaut passe devant le capteur (30) et soit ainsi détecté comme un utilisateur actuel.

2. Système d'affichage multi-vues (100) selon la revendication 1, dans lequel le capteur (30) est un capteur laser, un condensateur variable, un capteur à ultrasons, un capteur optique ou un capteur infrarouge.

3. Système d'affichage multi-vues (100) selon la revendication 1 ou 2, dans lequel le capteur (30) est adapté pour détecter la proximité du deuxième utilisateur (50) à l'écran tactile multi-vues (10).

4. Système d'affichage multi-vues (100) selon l'une quelconque des revendications 1 à 3, dans lequel l'écran tactile multi-vues (10) est un écran tactile capacitif.

5. Système d'affichage multi-vues (100) selon l'une quelconque des revendications 1 à 3, dans lequel l'écran tactile multi-vues (10) est un écran tactile résistif (10).

6. Système d'affichage multi-vues (100) selon l'une quelconque des revendications 1 à 5, dans lequel le système d'affichage multi-vues (100) est monté sur une unité principale dans un tableau de bord d'un véhicule.

7. Système d'affichage multi-vues (100) selon la revendication 6, dans lequel l'unité principale est un système d'info-divertissement.

8. Système d'affichage multi-vues (100) selon l'une quelconque des revendications 1 à 7, dans lequel le capteur de siège (20) est adapté pour détecter si une ceinture de sécurité est attachée.

9. Système d'affichage multi-vues (100) selon l'une quelconque des revendications 1 à 8, comprenant en outre une unité de mixage vidéo pour générer deux signaux vidéo correspondant au premier utilisateur (60) et au deuxième utilisateur (50).

10. Procédé de fonctionnement d'un système d'affichage multi-vues (100) comprenant un écran tactile multi-vues (10), un contrôleur (40) couplé à l'écran tactile multi-vues (10), un capteur de siège (20) et un capteur (30) pour détecter une proximité d'un premier utilisateur (60) ou d'un deuxième utilisateur (50) à l'écran tactile multi-vues (10), le capteur (30) étant situé sur un côté droit, ou un côté gauche, ou un côté inférieur droit ou un côté inférieur gauche de l'écran tactile multi-vues (10), comprenant :
la détection du fait qu'un siège est occupé par le deuxième utilisateur (50) par l'intermédiaire du capteur de siège (20), dans lequel, quand le siège n'est pas occupé par le deuxième utilisateur (50), le premier utilisateur (60) est l'utilisateur par défaut ; quand le siège est occupé par le deuxième utilisateur (50), un processus de détermination est lancé et l'utilisateur par défaut est celui qui est du côté opposé au capteur (30) ayant toujours le contrôle de l'écran tactile multi-vues (10) à moins qu'un utilisateur non par défaut passe devant le capteur (30) et soit ainsi détecté comme un utilisateur actuel ;
la détermination du fait que le capteur (30) détecte une proximité de l'utilisateur à l'écran tactile multi-vues (10) et l'identification du fait que l'événement tactile (11) est fourni par le premier utilisateur (60) ou le deuxième utilisateur (50) ;
la conversion de l'événement tactile (11) en une commande ; et
la réponse à la commande par le système d'affichage multi-vues (100).

11. Procédé selon la revendication 10, dans lequel le capteur (30) est un capteur laser, un condensateur variable, un capteur à ultrasons, un capteur optique ou un capteur infrarouge.

12. Procédé selon la revendication 10 ou 11, dans lequel l'écran tactile multi-vues (10) est un écran tactile capacitif.

13. Procédé selon la revendication 10 ou 11, dans lequel l'écran tactile multi-vues (10) est un écran tactile résistif.
